**Europäisches Patentamt**

**European Patent Office**

**Office européen des brevets**

(11) Publication number: **0 140 423**
**B1**

## (12) EUROPEAN PATENT SPECIFICATION

(45) Date of publication of patent specification: **11.07.90**

(51) Int. Cl.⁵: **C 08 L 35/06, C 08 L 25/16**

(21) Application number: **84201381.5**

(22) Date of filing: **27.09.84**

(54) Thermoplastic moulding compound.

(30) Priority: **01.10.83 NL 8303378**

(43) Date of publication of application:
**08.05.85 Bulletin 85/19**

(45) Publication of the grant of the patent:
**11.07.90 Bulletin 90/28**

(84) Designated Contracting States:
**AT BE CH DE FR GB IT LI NL SE**

(56) References cited:
**DE-A-3 140 564**
**DE-A-3 140 566**

(73) Proprietor: **STAMICARBON B.V.**
**Mijnweg 1**
**NL-6167 AC Geleen (NL)**

(72) Inventor: **Schepers, Herman Augustinus**
**Johannes**
**Leentstraat 33**
**NL-6171 LC Stein (L.) (NL)**
Inventor: **Debets, Wilhelmus Antonius Marie**
**Dr. Philipsstraat 91**
**NL-6136 XX Sittard (NL)**

(74) Representative: **Hoogstraten, Willem Cornelis**
**Roeland et al**
**OCTROOIBUREAU DSM Postbus 9**
**NL-6160 MA Geleen (NL)**

Courier Press, Leamington Spa, England.

## EP 0 140 423 B1

**Description**

The invention relates to a thermoplastic moulding compound based on a rubber-modified copolymer consisting of styrene and/or α-methylstyrene and maleic anhydride (MA).

Copolymers from styrene and maleic anhydride are known (SMA). The preparation of these copolymers can be effected batchwise, as well as through continuous processes. The first commercially available SMA copolymers were low-molecular products with molecular weights lower than 5000. These grades were used in, for instance, floor shampoos, floor waxes, emulsion paints and dispersing agents.

In addition to those low-molecular products, the high-molecular SMA copolymers are important, for instance in the automotive industry and in domestic articles.

As a result of the copolymerization of styrene with MA, SMA has a greater dimensional stability under heat than polystyrene and styrene-acrylonitrile copolymers, which may be very advantageous. Owing to the high softening temperature (approx. 220°C), it is not easy however, to process these copolymers through extrusion and injection·moulding. Moreover, the mechanical properties like impact resistance are insufficient. SMA itself is very brittle, but by the incorporation of a rubber it can be made impact-resistant; this process, however, involves a lowering of the rigidity.

In order to solve the said problems, a number of solutions have already been proposed. To this end see, for instance, the British patent specification 1315219 describing mixtures consisting of a copolymer of maleic anhydride, styrene and acrylonitrile, a copolymer from styrene and acrylonitrile and a graft copolymer of a mixture from styrene and acrylonitrile grafted on a rubber. In the British patent specification 1316330 a mixture of a styrene-acrylonitrile copolymer with a styrene-maleic anhydride copolymer is described.

From the German patent application 3140565 laid open to public inspection a moulding compound is known consisting of 50 to 90% (wt) of a copolymer consisting of 65 to 95% (wt) of a monovinylaromatic monomer and 5 to 35% (wt) of an unsaturated dicarboxylic anhydride and of 10 to 50% (wt) of a rubber composed from a monomer from the group of the conjugated dienes, alkylacrylates, monovinyl aromatics, vinyl ethers or ethylene, propylene and a non-conjugated diene and further an ethyl-unsaturated monomer with an —OH, —SH or —NHR group.

The moulding compound according to this German patent application, however, shows a low impact resistance.

The object of the invention is to provide a thermoplastic moulding compound based on a rubber-modified copolymer of styrene and/or α-methylstyrene and maleic anhydride which does not have the said disadvantages.

The moulding compounds according to the invention is characterized in that it comprises:

A. 50—95% (wt) of a copolymer consisting of:
1. 50—95% (wt) styrene and/or α-methylstyrene
2. 50—5% (wt) maleic anhydride
3. 0—20% (wt) acrylate
4. 0—20% (wt) acrylonitrile and

B. 5—50% (wt) of an ethylene-propylene rubber or ethylene-propylenediene rubber modified by grafting with a monomeric compound containing hydroxyl.

C. 0—30% (wt) ethylene-propylene rubber or ethylene-propylene-diene rubber.

To the moulding compound the usual additives can be added, such as stabilizers, antioxidants, antistatics, lubricants, fillers, colourants, pigments, etc.

Copolymer A preferably contains 65—90% (wt) styrene and 10—35% (wt) maleic anhydride.

The mixture preferably contains 65—95% (wt) of copolymer A and 5—35% (wt) of the modified rubber B.

Surprisingly it has been found that, in addition to a good UV resistance, such a moulding compound also has an excellent impact resistance, dimensional stability under heat and rigidity.

Moreover it is possible to use an ethylene-propylene rubber or ethylene-propylene-diene rubber which can be produced on-a large scale and which is applicable after a small modification.

In US—A—3322853 a mixture is described consisting of a hydroxylated diene rubber, a styrene-maleic anhydride copolymer with a low molecular weight and a polyepoxide. Unlike the invention, this mixture comprises diene rubbers and polyepoxides and is used as coating or adhesive. Owing to the use of EP or EPT rubbers with non-conjugated dienes, so rubbers with few or no unsaturations in the main chain, the mixtures according to the invention have a good UV resistance and oxidation stability.

The copolymer based on styrene and/or α-methylstyrene and maleic anhydride consists of:
50—95% (wt) styrene and/or α-methylstyrene
50—5 % (wt) maleic anhydride
0—20% (wt) acrylate
0—20% (wt) acrylonitrile,
and preferably of
65—90% (wt) styrene and/or α-methylstyrene
10—35% (wt) maleic anhydride

The copolymers used in the invention have a weight-average molecular weight between 30,000 and

2

500,000 and preferably between 100,000 and 400,000.

The weight average molecular weight ($M_w$) can be determined through a method described in Journal of Applied Polymer Science, Vol. 20, 1619—1626 (1976). By determining the intrinsic viscosity at 25.0°C in tetrahydrofuran a method has been developed for determining the weight average molecular weight ($=M_w$) by a single calibration curve. For MA percentages of 5—50 moles % and an $M_w$ range of $2 \times 10^4$ to $7 \times 10^6$ the following equation is applicable:

$$\eta = 3.98 . 10^{-4} . M_w 0.596,$$

where:

$\eta$ = intrinsic viscosity

$M_w$ = weight average molecular weight.

In DE—A—3140566 a blend is described of a styrene-maleic anhydride copolymer with a modified rubber. The rubber component is a rubber, on which a copolymer is grafted consisting of styrene and a second monomer with a —OH, —SH or NHR group.

The resulting blend however shows a low impact resistance and the dimensional stability under heat and rigidity is unsufficient.

The copolymers of styrene and/or α-methylstyrene and maleic anhydride are known per se and are described in literature. Generally they are prepared according to customary processes for, for instance, mass polymerization or polymerization in solution. This copolymers of styrene and maleic anhydride can, for instance, be obtained by reacting the two monomers, styrene and maleic anhydride, with each other in the presence of benzoyl peroxide. The polymerization rate can be better controlled when a solvent is used, for instance acetone, toluene, xylene, dioxane or methyl ethyl ketone.

A 50:50 (molar) — copolymer can be obtained by discontinuous copolymerization of styrene and maleic anhydride, for instance by precipitation polymerization of styrene and maleic anhydride in aromatic solvents. Copolymers having less maleic anhydride can be obtained if in a continuous copolymerization process a mixture of much styrene and little maleic anhydride is fed at high temperature into a polymerization vessel while being stirred vigorously and at the same time the same quantity of polymerization mixture is removed from the vessel (A. W. Hanson and R. L. Zimmermann, Industrial Engineering Chemistry 49, page 1803, 1957).

As terpolymer the styrene-maleic anhydride copolymer may contain 0—20% (wt) acrylonitrile or an acrylate such as methyl methacrylate or ethyl acrylate. The terpolymer preferably contains a minimum of 5% (wt) acrylonitrile.

As rubbery largely saturated polymers rubbers can be used having few or no unsaturations in their main chain, i.e. containing fewer than 2 and preferably fewer than 1.5 double bonds per 1000 carbon atoms. The rubbers may have unsaturation in the side chains, however, which unsaturation can be used, for instance, for crosslinking.

The rubbers particularly suitable to be used according to the process of the invention are ethylene-propylene copolymers (the so-called EP rubbers) and preferably ethylene-propylene copolymers containing copolymerized other polyunsaturated monomers (the so-called EPT rubbers), or mixtures of two or more of these rubbers. Examples of these polyunsaturated monomers include hexadiene-1,4,dicyclopentadiene, tricyclopentadiene, 5-vinylnorbornene-2, 5-ethylidene-norbornene-2, 5-methylene-norbornene-2, 5-(2-propenyl)norbornene-2, 5-(5-hexenyl)norbornene-2, 4,7,8,9-tetrahydroindene and isopropylidenetetrahydroindene. For the preparation of these rubbers see, for instance, the Netherlands patent applications 6806893 and 300585 laid open to public inspection. The rubbers used are modified with hydroxylgroups.

The hydroxyl groups are incorporated in the ethylene-propylene or ethylene-propylene-diene rubbers by grafting the rubber with a hydroxylfunctional monomer, such as 2-hydroxyethylacrylate, 2-hydroxypropyl-acrylate and the corresponding methacrylates, alcohols, such as allylalcohol and vinylbenzylalcohol.

Preferably an ethylene-propylene-diene rubber is modified with hydroxylgroups by grafting 2-hydroxyethylmethacrylate (HEMA) in a 10%-xylene solution of the EPT rubber. Through such a process EPT rubbers with different HEMA percentages can be obtained by variation of the HEMA concentrations or by using different grafting times. The resulting product is subsequently purified by, for instance, extraction.

The number of OH-groups in the EP or EPT rubber is generally more than 0.01% (wt) preferably 0.05 to 10% (wt) (calculated on the modified EP or EPT rubber).

The modified EP or EPT rubber can be mixed with the SMA matrix in a usual mixing device such as a single or twin-screw extruder, impeller mixer, Banbury mixer, roll mills etc.

To the mixture 0—30% (wt) ethylene-propylene or ethylenepropylene-diene rubber can be added.

During the reaction a reaction accelerator can be added. Preference is given to adding to the mixture 0.01—10% (wt) of the reaction accelerator, calculated on the total mixture. Examples of this kind of accelerators are dibutyltinmaleate, tetrabutoxytitanium, magnesiumstearate, zincstearate, calciumstearate and/or aluminiumstearate.

The components are mixed advantageously at a temperature between 160°C and 290°C.

The moulding compound is suitable for many applications. Thus many objects can be produced from it such as, for instance, tubes, bottles, furniture, dashboards for motor cars, casings and housings for electronic and domestic apparatuses, show heels, caravans, skis and surf boards.

The invention also relates to an object wholly or partly produced from a moulding compound as described above.

The invention is further elucidated by means of the following examples and comparative experiments without being limited thereto.

Examples 1 up to and including 4 and Comparative Examples a and b

To a roll mill consisting of two rolls, diameter 80 mm and width 200 mm, with a friction of 1:1.2, were supplied:

— 45 parts by weight SMA (MA content 14% (wt) and $M_w$ 250,000)

— 15 parts by weight OH-modifed EPT

— 0.2 parts by weight dibutyltinmaleate as reactionaccelerator

— 0.25 parts by weight octadecyl-3-(3,5-di-ter-butyl-4-hydroxyphenyl)propionate as stabilizer.

The components were subsequently mixed for 20 minutes at a temperature of 180°C and a speed of 35 rpm.

Of the moulding compounds thus obtained the

— impact resistance according to ASTM—D—256

— rigidity according to ASTM—D—790

— HDT, unannealed, according to ASTM—D—648 were determined.

The EPT rubber was modified with hydroxyl groups by grafting 2-hydroxyethylmethacrylate (HEMA) in a 10% xylene solution of the EPT rubber.

These examples illustrate the influence of different HEMA percentages of the rubber on the properties of the moulding compound (see table 1).

### Table 1

| example | SMA | OH–EPT | OH | HEMA | impact resist. | rigidity | HDT |
|---|---|---|---|---|---|---|---|
| | pts.wt | pts.wt | % (wt)* | % (wt)* | kJ/m² | N/mm² | °C |
| a | 60 | – | – | – | 0.4 | 3650 | 116 |
| b | 45 | 15 | – | – | 1.2 | 1700 | 108 |
| 1 | 45 | 15 | 0.29 | 2.2 | 3 | 1600 | 108 |
| 2 | 45 | 15 | 0.60 | 4.6 | 18 | 1500 | 108 |
| 3 | 45 | 15 | 0.85 | 6.5 | 20 | 1940 | 108 |
| 4 | 45 | 15 | 0.87 | 6.7 | 22 | 1950 | 108 |

\* calculated on quantity OH–EPT

These examples clearly show that the moulding compounds according to the invention combine a good impact resistance with a good rigidity and dimensional stability under heat.

Examples 5 up to and including 7

In the following examples, realized analogously to examples 1 up to and including 4, the quantities of SMA and OH-modified EPT were varied.

SMA is the same as in the examples 1 up to and including 4. The EPT rubber, however, was modifed with OH groups by grafting 2% allylalcohol (AA) on the EPT rubber (see table 2).

Example 8

45 parts by weight SMA (MA content 20% (wt) and $M_w$ 150,000) was mixed with 15 parts by weight OH-modified EPT rubber. The EPT rubber was modified with OH-groups by grafting 2% allylalcohol on the EPT rubber. Other additions wer analogous to examples 1 up to and including 4.

4

Table 2

| example | SMA | OH—EPT | OH | AA | impact resist. | rigididy | HDT |
|---|---|---|---|---|---|---|---|
| | pts. wt | pts. wt | % (wt)* | % (wt)* | kJ/m$^2$ | N/mm$^2$ | °C |
| a | 60 | – | – | – | 0.4 | 3650 | 116 |
| 5 | 51 | 9 | 0,6 | 2 | 2.3 | 2380 | 112 |
| 6 | 48 | 12 | 0,6 | 2 | 15 | 1960 | 109 |
| 7 | 45 | 15 | 0,6 | 2 | 20 | 1470 | 108 |
| 8 | ·45 | 15 | 0,6 | 2 | 11 | 1500 | 115 |

* calculated on quantity of OH—EPT

## Claims

1. Thermoplastic moulding compound based on a rubber-modified copolymer consisting of styrene and/or α-methylstyrene and maleic anhydride, characterized in that the moulding compound consists of a mixture of:
A. 50—95% (wt) of a copolymer consisting of:
1. 50—95% (wt) styrene and/or α-methylstyrene
2. 50—5% (wt) maleic anhydride
3. 0—20% (wt) acrylate
4. 0—20% (wt) acrylonitrile and
B. 5—50% (wt) of an ethylene-propylene rubber or ethylene-propylene-diene rubber modified by grafting with a monomeric compound containing hydroxyl.
C. 0—30% (wt) ethylene-propylene rubber or ethylene-propylene-diene rubber.

2. Moulding compound according to claim 1, characterized in that copolymer A contains 65—90% (wt) styrene and 10—35% (wt) maleic anhydride.

3. Moulding compound according to claims 1—2, characterized in that the moulding compound contains 65—95% (wt) of copolymer A and 5—35% (wt) of the modified rubber B.

4. Moulding compound according to claims 1—3, characterized in that copolymer A has a weight-average molecular weight between 30,000 and 500,000.

5. Moulding compound according to claims 1—4, characterized in that copolymer A has a weight-average molecular weight between 100,000 and 400,000.

6. Moulding compound according to claims 1—5, characterized in that the modifed ethylene-propylene rubber or ethylene-propylene-diene rubber contains 0.05% (wt)—10% (wt) hydroxyl groups.

7. Moulding compound according to claims 1—6, characterized in that the mixture has been prepared while using 0.01—10% (wt) of a reactionaccelerator, calculated on the total mixture.

8. Moulding compound according to claim 7, characterized in that this reactionaccelerator is dibutyltinmaleate, tetrabutoxytitanium, magnesiumstearate, zincstearate, calciumstearate and/or aluminiumstearate.

9. Object wholly or partly produced from a moulding compound according to any one of claims 1—8.

## Patentansprüche

1. Thermoplastische Formmasse auf Basis eines kautschukmodifizierten Copolymers bestehend aus Styrol und/oder α-Methylstyrol und Maleinsäureanhydrid, dadurch gekennzeichnet, daß die Formmasse aus einer Mischung von
A. 50 bis 95% (Gew.) eines Copolymers bestehend aus
1. 50 bis 95% (Gew.) Styrol und/oder α-Methylstyrol,
2. 50 bis 95% (Gew.) Maleinsäureanhydrid,

3. 0 bis 20% (Gew.) Acrylat,

4. 0 bis 20% (Gew.) Acrylnitril,

B. 5 bis 50% (Gew.) eines Äthylen-Propylenkautschuks oder Äthylen-Propylen-Dienkautschuks modifiziert durch Pfropfen mit einer monomeren hydroxylhaltigen Verbindung und

C. 0 bis 30% (Gew.) Äthylen-Propylenkautschuk oder Äthylen-Propylen-Dienkautschuk besteht.

2. Formmasse nach Anspruch 1, dadurch gekennzeichnet, daß das Copolymer A 65 bis 90% (Gew.) Styrol und 10 bis 35% (Gew.) Maleinsäureanhydrid enthält.

3. Formmasse nach den Ansprüchen 1 bis 2, dadurch gekennzeichnet, daß die Formmasse 65 bis 95% (Gew.) Copolymer A und 5 bis 35% (Gew.) modifizierten Kautschuk B enthält.

4. Formmasse nach den Ansprüchen 1 bis 3, dadurch gekennzeichnet, daß das Copolymer A ein gewichtsmittleres Molgewicht von 30 000 bis 500 000 aufweist.

5. Formmasse nach den Ansprüchen 1 bis 4, dadurch gekennzeichnet, daß das Copolymer A ein gewichtsmittleres Molgewicht von 100 000 bis 400 000 aufweist.

6. Formmasse nach den Ansprüchen 1 bis 5, dadurch gekennzeichnet, daß der modifizierte Äthylen-Propylenkautschuk oder Äthylen-Propylen-Dienkautschuk 0,05 bis 10% (Gew.) Hydroxylgruppen enthält.

7. Formmasse nach den Ansprüchen 1 bis 6, dadurch gekennzeichnet, daß die Mischung hergestellt wurde, während 0,01 bis 10% (Gew.) eines Reaktionsbeschleunigers, bezogen auf die gesamte Mischung, verwendet wurden.

8. Formmasse nach Anspruch 7, dadurch gekennzeichnet, daß dieser Reaktionsbeschleuniger Dibutylzinnmaleat, Tetrabutoxytitan, Magnesiumstearat, Zinkstearate, Calciumstearat und/oder Aluminiumstearat ist.

9. Zur Gänze oder zum Teil aus einer Formmasse nach einem der Ansprüche 1 bis 8 hergestellter Gegenstand.

**Revendications**

1. Une masse de moulage thermoplastique à base d'un copolymère de caoutchouc modifié composé de styrène et/ou d'-méthylstyrène et d'anhydride maléique, caractérisé en ce que la masse de moulage est composée d'un mélange de:

A. 50—95% (en poids) d'un copolymère composé de:

1. 50—95% (en poids) de styrène et/ou d'α-méthylstyrène.

2. 50—5% (en poids) d'anhydride maléique.

3. 0—20% (en poids) d'acrylate.

4. 0—20% (en poids) d'acrylonitrile.

B. 5—50% (en poids) d'un caoutchouc d'éthylènepropylène ou d'un caoutchouc d'éthylène-propylène-diène modifié par greffage avec un composant monomère contenant de l'hydroxyle.

C. 0 — 30% (en poids) de caoutchouc d'éthylènepropylène ou de caoutchouc d'éthylène-propylène-diène.

2. Une masse de moulage selon la Revendication 1, caractérisée en ce que le copolymère A contient de 65 à 90% (en poids) de styrène et de 10 à 35% (en poids) d'anhydride maléique.

3. Une masse de moulage selon l'une des Revendications 1 à 2, caractérisée en ce que la masse de moulage contient de 65 à 95% (en poids) de copolymère A et de 5 à 35% (en poids) de caoutchouc modifié B.

4. Une masse de moulage selon l'une des Revendications 1 à 3, caractérisée en ce que le copolymère A a une poids moléculaire moyen compris entre 30.000 et 500.000.

5. Une masse de moulage selon l'une des Revendications 1 à 4, caractérisée en ce que le copolymère A a un poids moléculaire moyen compris entre 100.000 et 400.000.

6. Une masse de moulage selon l'une des Revendications 1 à 5, caractérisée en ce que le caoutchouc d'éthylènepropylène ou le caoutchouc d'éthylène-propylène-diène modifié contient de 0,05% (en poids) à 10% (en poids) de groupes hydroxyles.

7. Une masse de moulage selon l'une des Revendications 1 à 6, caractérisée en ce que le mélange a été préparé en utilisant de 0,01 à 10% (en poids) d'un accélérateur de réaction, calculé par rapport au mélange total.

8. Une masse de moulage selon la Revendication 7, caractérisé en ce que cet accélérateur de réaction est du dibutylmaléate d'étain, du tétrabutoxytitane, du stéarate de magnésium, du stéarate de zinc, du stéarate de calcium, et/ou du stéarate d'aluminium.

9. Un objet fabriqué entièrement ou un partie à partir d'une masse de moulage selon l'une des Revendications 1 à 8.